# EUROPEAN PATENT APPLICATION

(11) **EP 4 435 240 A1**
(43) Date of publication of application: **25.09.2024**
(21) Application number: 24155811.3
(22) Date of filing: 05.02.2024
(51) Int. Cl.: F01M 1/10, F01M 1/16, F16K 17/04

(54) **LUBRICATING OIL SUPPLY SYSTEM AND RELIEF VALVE FOR USE IN AN INTERNAL COMBUSTION ENGINE**

(30) Priority: 28.02.2023 GB 202302938
(71) Applicant: Caterpillar Energy Solutions GmbH, 68167 Mannheim (DE)
(72) Inventor: BERGER, Olaf, 68167 Mannheim (DE)
(74) Representative: Nordmeyer, Philipp Werner

(57) **Abstract**

The present invention refers to lubricating oil supply system of an internal combustion engine, which comprises an oil pump, a suction port of which is fluid-communicatively connected to a lubricating oil reservoir via a suction line and a discharge port of which is fluid-communicatively connected to a pressure line for supplying pressurized lubricating oil to lubricated sections of the engine, and a relief valve (26), an input port (30) of which is fluid-communicatively connected to the pressure line and an output port (32) of which is fluid-communicatively connected to the lubricating oil reservoir via a relief line (34), wherein the relief valve (26) comprises a releasable relief channel (36) and a separate ventilation channel (38) each fluid-communicatively connecting the pressure line to the relief line (34).

## Description

### Technical Field

The present invention refers to a lubricating oil supply system of an internal combustion engine. Further, the present invention refers to a relief valve, in particular to an oil pressure control valve, for use in such a lubricating oil supply system.

### Technological Background

For ensuring reliable operation of internal combustion engines, the use of lubricating oil systems is known which provide lubricating oil to various moving parts in the engine. In this way, friction and wear may be reduced by enabling the formation of an oil film between moving parts. In addition, the supplied lubricating oil may further serve as a coolant and as a cleaner.

The lubricating oil system typically constitutes a lubricating oil circuit which circulates lubricating oil through the engine. For doing so, the lubricating oil system comprises a supply system by means of which lubricating oil is drawn from a lubricating oil reservoir and pressurized by an oil pump before being directed into an engine block. In the supply system, the lubricating oil, after being drawn from the reservoir, typically passes a strainer, a suction line, the oil pump, a pressure line, a filter and a heat exchanger before entering the engine. Thereafter, i.e. upon entering the engine block, the lubricating oil is guided through an oil gallery and is distributed to various branch lines guiding towards different sections of the engine. After passing through the engine block, the lubricating oil is returned to the reservoir before being redirected through the engine.

The reservoir is usually installed at a low pressure side, i.e. at a lower end section, of the lubricating oil system. Accordingly, upon flowing through the lubricating oil supply system, the lubricating oil rises and its potential energy increases. By this configuration, in a state in which the oil pump and the engine is no longer operated, the lubricating oil present in the lubricating oil supply system may drain back into the reservoir via the suction line which, due to suction effects, may result in undesirably unloading lubricating oil from the lubricating oil system. When the internal combustion engine thereafter resumes operation, the oil pump, at first, needs to fill up the lubricating oil system again before a desired lubricating oil pressure level in the engine can be established. This, however, may lead to undesired delays when operating the lubricating oil system.

To prevent the lubricating oil system from being unintendedly and excessively unloaded in an idle state of the engine, the use of check valves is known which are arranged in the suction line or pressure line of the lubricating oil supply system. However, the use of check valves in the main flow passage of the lubricating oil supply system may result in pressure loses, leakage and higher costs.

### Summary of the Invention

Starting from the prior art, it is an objective to provide an improved lubricating oil supply system of an internal combustion engine, which in particular enables to prevent reverse flow of lubricating oil in idle states of an engine without requiring employment of a check valve in a main flow passage. It is a further objective to provide a relief valve for use in such a lubricating oil supply system.

These objectives are solved by the subject matter of the independent claims. Preferred embodiments are set forth in the present specification, the Figures as well as the dependent claims.

Accordingly, a lubricating oil supply system of an internal combustion engine is provided, comprising an oil pump, a suction port of which is fluid-communicatively connected to a lubricating oil reservoir via a suction line and a discharge port of which is fluid-communicatively connected to a pressure line for supplying pressurized lubricating oil to lubricated sections of the engine; and a relief valve, an input port of which is fluid-communicatively connected to the pressure line and an output port of which is fluid-communicatively connected to the lubricating oil reservoir via a relief line, wherein the relief valve comprises a releasable relief channel and a separate ventilation channel each fluid-communicatively connecting the pressure line to the relief line.

Furthermore, a relief valve for use in a lubricating oil supply system of an internal combustion engine is provided. The relief valve comprises a releasable relief channel and a separate ventilation channel each fluid-communicatively connecting an input port to an output port of the relief valve.

The suggested relief valve may be employed in the above described suggested lubricating oil supply system. Thus, any technical features disclosed in the present disclosure in connection with the suggested lubricating oil supply system may also refer and be applied to the suggested relief valve, and vice versa.

### Brief Description of the Drawings

The present disclosure will be more readily appreciated by reference to the following detailed description when being considered in connection with the accompanying drawings in which:
Fig. 1 depicts a diagrammatic illustration of a lubricating oil circuit of an internal combustion engine;
Fig. 2 depicts a schematic sectional view of a relief valve used in the lubricating oil circuit depicted in Figure 1; and
Fig. 3 depicts a schematic illustration of a lubricating oil supply system used in the lubricating oil circuit depicted in Figure 1.

### Detailed Description of Preferred Embodiments

In the following, the invention will be explained in more detail with reference to the accompanying Figures. In the Figures, like elements are denoted by identical reference numerals and repeated description thereof may be omitted in order to avoid redundancies.

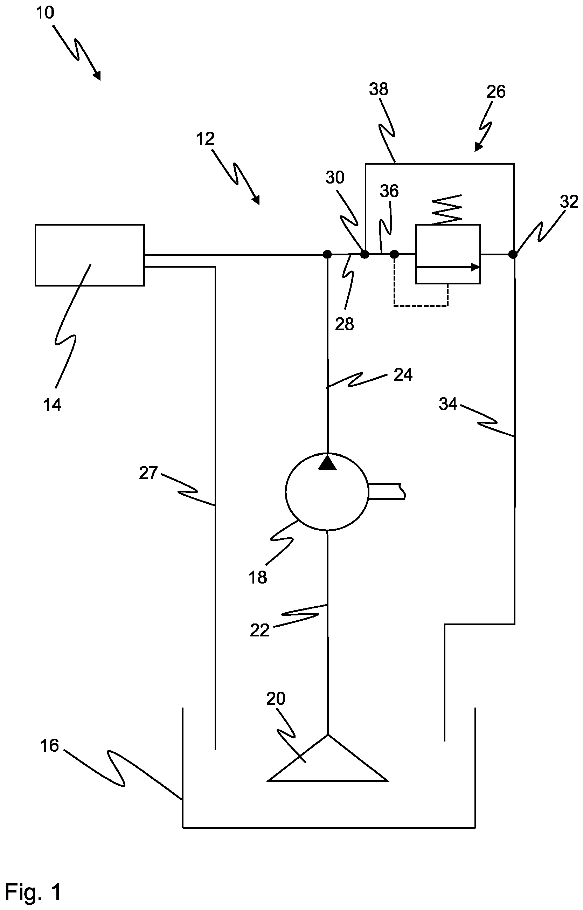

Figure 1 depicts a lubricating oil system in the form of a lubricating oil circuit 10 which comprises a lubricating oil supply system 12 according to an embodiment of the present invention. The lubricating oil supply system 12 is referred to as "the supply system" hereinafter.

The shown lubricating oil circuit 10 is employed in an internal combustion engine (not shown), referred to as "the engine" hereinafter, and configured to selectively provide lubricating oil to different lubricated sections 14 of the engine. The lubricated sections 14 refer to sections of the engine to be lubricated during operation and may comprise, for example, sliding or bearing sections, such as piston bearings, or any sections which require supply of lubricating oil, e.g. for minimizing wear or for enabling proper heat dissipation. Specifically, the lubricated sections 14 may be provided within the engine block and the cylinder head of the engine.

The use of the lubricating oil circuit 10 is not limited to engines of a specific type or application, but rather may be applied among different types of engines, such as diesel engines or gas engines, and among different applications, such as engines used in power plants or vehicles as a main or auxiliary engine or the like. For example, the engine which is equipped with the lubricating oil circuit 10 may be a reciprocating engine in the form of a diesel engine having a plurality of cylinders, e.g., four, eight, twelve or eighteen cylinders. The cylinders may be provided in an engine block and may be delimited from above by at least one cylinder head. Each cylinder may be provided with a combustion chamber delimited by a piston accommodated in the cylinder. The pistons may be configured for reciprocating and axial movement within the cylinders and may be coupled to a crank shaft of the engine such that the reciprocating movement of the pistons is transferred into a rotating movement of the crank shaft.

As set forth above, the lubricating oil circuit 10 comprises the supply system 12 which is configured to draw lubricating oil from a lubricating oil reservoir 16 and to supply pressurized lubricating oil to the lubricated sections 14 of the engine. The lubricating oil reservoir 16, referred to as "the reservoir" hereinafter, may be provided in or at the bottom of a crankcase of the engine and thus may also be referred to as a sump or an oil pan. Alternatively, the reservoir 16 may be arranged beneath the crankcase or engine block and thus may also be referred to as a drain tank. As such, the reservoir 16 constitutes a low-pressure section of the lubricating oil circuit 10 which is installed at a lower end section of the engine, in particular of its engine block (not shown).

In the context of the present disclosure, the terms "lower", "upper", etc. refer to relative vertical positions in an installed state of the engine and the circuit 10.

For drawing the lubricating oil from the reservoir 16, the supply system 12 comprises at least one oil pump 18 which is driven, in particular rotationally driven, by the crank shaft of the engine. A suction port of the oil pump 18 is fluid-communicatively connected to the reservoir 16 via a strainer 20 and a suction line 22. Thus, upon operating the oil pump 16, lubricating oil from the reservoir 16 is successively sucked through the strainer 20 and the suction line 22 before entering the suction port of the oil pump 16. Specifically, the suction port of the oil pump 18 is directly connected to the suction line 22. In other words, the suction line 22 opens into the suction port.

A discharge port of the oil pump 16 is fluid-communicatively connected to the lubricated sections 14 of the engine via a pressure line 24. The pressure line 24 is configured to supply pressurized lubricating oil to the lubricated sections 14 of the engine. Specifically, the discharge port of the oil pump 18 is fluid-communicatively connected, in particular directly connected, to the pressure line 24.

The supply system 12 further comprises a relief valve 26 fluid-communicatively connected to the pressure line 24. The relief valve 26 constitutes or serves as an oil pressure control valve configured to control pressure of the pressurized lubricating oil guided toward the lubricated sections 14 of the engine. By doing so, the relief valve 26 may be configured to prevent the lubricated sections 14 of the engine from being subjected to excessive loads induced by too high lubricating oil pressure.

Before being guided into the engine block and the lubricated sections 14 of the engine, the pressurized lubricating oil may further be guided through a filter and/or a heat exchanger unit (not shown), in particular a cooling unit, of the supply system 12.

Upon entering the engine, in particular its engine block, the pressurized lubricating oil may be guided through an oil gallery, also referred to as main oil gallery, before being distributed to various branch lines guiding toward the different lubricated sections 14 of the engine. After passing the lubricated sections 14, the used lubricating oil is collected and returned into the reservoir 16 via at least one return line 27.

The basic structural and functional configuration of such a lubricating oil circuit 10, in particular of its supply system 12, are well known to a person skilled in the art and are thus not further described in the present disclosure. Rather, technical features relating to the supply system 12 and the relief valve 26 which are interlinked with the present invention are further specified in the following. Although not further described hereinafter, the skilled person understands that the lubricating oil circuit 10, in particular the supply system 12, may comprise additional components, such as, an electric pump, i.e. which is electrically driven and used during engine start up, at least one safety valve, a bypass valve, etc.

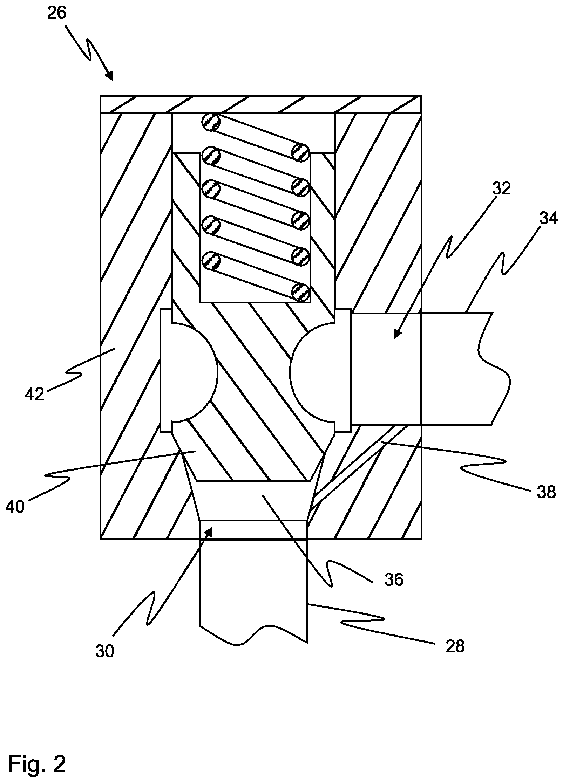

As set forth above, the supply system 12 is equipped with the relief valve 26. Fig. 2 shows the relief valve 26 according to an embodiment of the present invention. As can be gathered from Fig. 2, the relief valve 26 comprises an input port 30 which is fluid-communicatively connected to the pressure line 24 via an optional connecting line 28. According to on configuration, the input port 30 may be directly connected to the pressure line 24. The relief valve 26 further comprises an output port 32 which is fluid-communicatively connected to the lubricating oil reservoir via a relief line 34.

The relief valve 26 further comprises a releasable relief channel 36 and a separate ventilation channel 38. Each one of the relief channel 36 and the ventilation channel 38 fluid-communicatively connects the input port 30 to the output port 32 of the relief valve 26. By doing so, each one of the relief channel 36 and the ventilation channel 38 fluid-communicatively connect the pressure line 24 to the relief line 34.

The relief channel 36 and the ventilation channel 38 constitute separate flow channels. That is, the relief channel 36 and the ventilation channel 38 form and define separate flow passages through the supply system 10, in particular through the relief valve 26. As such, the relief channel 36 and the ventilation channel 38 are arranged in parallel to one another.

As set forth above, the relief valve 26 constitutes an oil pressure control valve. As such, the relief valve 26 is configured to open the relief channel 36 when a pressure prevailing at the input port 30 reaches a predetermined threshold pressure.

For doing so, the relief valve 26 is provided such that the relief channel 36 is releasable. That is, the relief valve 26 is configured to selectively release, i.e. open, and optionally selectively close the relief channel 36. For doing so, the relief valve 26 may comprise a valve member 40 configured for selectively opening and closing the relief channel 36. In a released state in which the relief channel 36 is released, lubricating oil present in the pressure line 24 can be guided through the relief channel 36 into the relief line 34. Accordingly, in a closed state in which the relief channel 36 is closed by the valve member 40, lubricating oil present in the pressure line 24 is prevented from being guided through the relief channel 36. In the shown configuration, the valve member 40 is spring biased toward a closing position in which the valve member 40 closes the relief channel 36.

In the configuration depicted in Fig. 2, the ventilation channel 38 is or is formed by a through hole or drill hole provided in a housing 42 of the relief valve 26. Specifically, the ventilation channel 38 is straight-lined and has a constant diameter along its longitudinal axis. According to an alternative configuration, the ventilation channel may, at least partly, be curved. Alternatively or additionally, the ventilation channel may have a varying diameter along its longitudinal axis. For example, in an alternative configuration, the ventilation channel may be provided in the form of a countersunk hole or a counterbored hole.

In the shown configuration, a flow cross-section, in particular a minimal flow cross-section, of the ventilation channel 38 has a diameter, in particular a maximal diameter, in the range of 1 mm to 6 mm, in particular in the range of 1 mm to 5 mm or in the range of 2 mm to 5mm. For example, the diameter, in particular the maximal diameter, of the flow cross-section, in particular the minimal flow cross-section, of the ventilation channel 38 may be or may substantially be 1 mm or 2 mm or 3 mm or 4 mm or 5 mm.

Further, the flow cross-section, in particular the minimal flow cross-section, of the ventilation channel 38 has a size that is smaller than a size of a flow cross-section, in particular a minimal flow cross-section, of each one of the relief channel 36, the pressure line 24, the connecting line 28, the relief line 34. Specifically, the size of the minimal flow cross-section of the ventilation channel 38 is at least one fifth or at least one tenth or at least one twentieth of the size of the minimal flow cross-section of each one of the relief channel 36, the pressure line 24, the connecting line 28, the relief line 34.

As can be gathered from Fig. 2, the ventilation channel 38 is provided such that, at a first end section, the ventilation channel 38 opens into the input port 30 and, at an opposing second end section, opens into the output port 32. According to an alternative embodiment, the ventilation channel may be provided such that, at its first end section, the ventilation channel opens into the connecting line 28 or the pressure line 24. Alternatively or additionally, the ventilation channel may be provided such that, at its second end section, the ventilation channel opens into the relief line 34.

In the shown configuration, the ventilation channel 38 is provided as an integral part of the housing 42. According to an alternative embodiment, the ventilation channel may, at least partly, be provided by a component being separate from the housing 42. For example, the ventilation channel may be defined by a bypass pipe which, at its end sections, is fluid-communicatively connected to the pressure line 24 and the relief line 34. Further, the bypass pipe may be provided separate from the housing 42 and may be arranged spaced apart therefrom.

According to an alternative configuration, the ventilation channel 38 and the relief channel 36 may be fluid-communicatively connected to separate relief lines.

In the context of the present disclosure, the relief valve 26 refers to a component or assembly unit constituting a part of the supply system 12. As such, the relief valve 26 may also be referred to as relief valve unit and may comprise or may be constituted by one or more separate components. For example, the relief valve may be provided in the form of an assembly unit comprising one component forming or including the input port, the output port, the relief channel and the valve member and a further separate component forming or including, at least partly, the ventilation channel.

As indicated already by its notation, the ventilation channel 38 is configured and intended to provide a flow passage for air, in particular ambient air. As such, the ventilation channel 38 allows exchange of air therethrough. Specifically, the ventilation channel 38 is configured to provide a flow passage for ambient air in a state in which the oil pump 18 is not running, e.g. when the engine is in an idle state. More specifically, the supply system 12 and the relief valve 26 are configured such that, in the state in which the oil pump 18 is not operated, the ventilation channel 38 is configured to provide a flow passage for air, in particular ambient air, enabling that air is directed into the pressure line 24.

As such, the ventilation channel 38 serves as a breathing hole enabling that air enters into the pressure line 24 in the state in which the oil pump 18 is not operated, e.g. in a state in which the engine is not running. By this configuration, the suggested supply system 12 enables that, in the idle state, lubricating oil present in the supply system 12 is unloaded by flowing downwards the pressure line 24 and the suction line 22 without drawing lubricating oil from parts of the lubricating oil circuit 10 arranged downstream of the supply system 12, in particular downstream of the pressure line 24 or the connecting line 28. In the context of the present disclosure, the term "downstream" refers to a flow direction of lubricating oil during operation of the oil pump 18.

In this way, the suggested supply system 12 effectively prevents excessive reverse flow of lubricating oil in idle states of the engine without requiring employment of a check valve in the suction line 22 or pressure line 24 of the supply system 12. Accordingly, a check valve in the suction line 22 and pressure line 24 of the suggested supply system 12 is omitted in the shown configuration.

Further, in the shown configuration, the relief valve 26 is provided such that the ventilation channel 38 remains open during operation of the engine, i.e. when the oil pump 18 is running This may be enabled by the geometrical dimensions of the ventilation channel 38, in particular of its flow cross-section, as described above, which reduces leakage of pressurized lubricating oil through the ventilation channel 38 to a tolerable and thus acceptable amount without impairing proper operation of the supply system 12. In this way, a particularly simple design of the relief valve 26 may be provided. According to an alternative embodiment, a check valve may be provided in or at the ventilation channel 38 which enables flow of fluid from its second end section to its first end section, but blocks flow in the opposite direction.

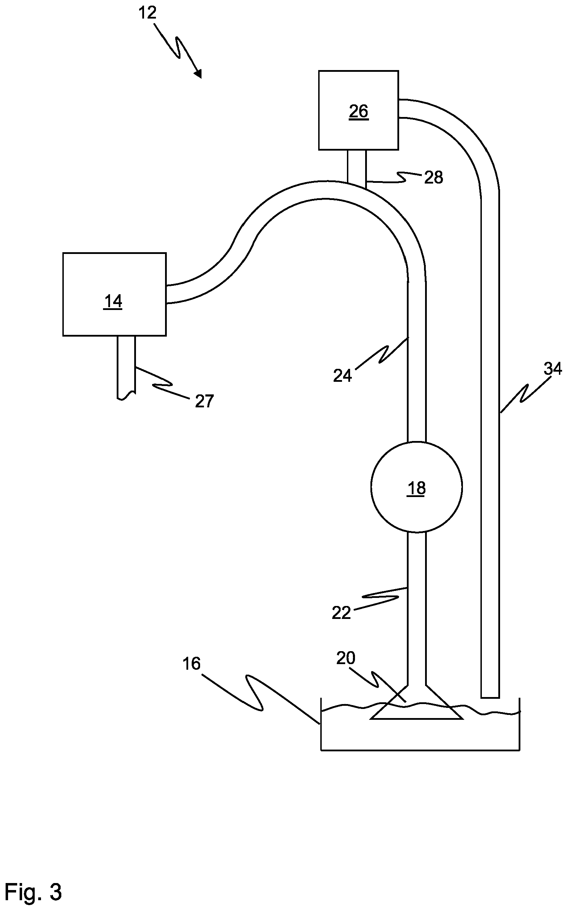

Further, for allowing air to enter the ventilation channel 38, the relief line 34 is provided such that it allows air to enter therein. For doing so, a lower end of the relief line 34 may be arranged such that it does not immerge into lubricating oil present in the reservoir 16. In other words, the relief line 34 is arranged spaced apart from lubricating oil stored in the reservoir 16, as depicted in Fig. 3. Alternatively or additionally, the relief line 34 may be provided with ventilation holes enabling air to enter the relief line 34.

Fig. 3 depicts a schematic view of the supply system 12 in an installed state in which the supply system 12 is mounted to an engine block (not shown) of the engine. The purpose of the illustration shown in Fig. 3 is, inter alia, to depict the relative vertical positions of the different components of the lubricating oil circuit 10.

As can be gathered from Fig. 3, the relief valve 26, in particular the ventilation channel 38, is positioned at an upper end section of the supply system 12 and the lubricating oil circuit 10 in general. Specifically, the relief valve 26, in particular the ventilation channel 38, is arranged, at least partly, above a lower end section of the lubricated sections 14, in particular above a lower end section of the oil gallery guiding the pressurized lubricating oil toward the different lubricated section 14 within the engine block. More specifically, the relief valve 26, in particular the ventilation channel 38, is arranged, at least partly, above the lubricated sections 14. Further, the relief valve 26, in particular the ventilation channel 38, is arranged, at least partly, above the pressure line 24. More specifically, the second end section of the ventilation channel 38 which opens into the relief line 34 or output port 32 of the relief valve 26 is arranged above the pressure line 24.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention. This is in particular the case with respect to the following optional features which may be combined with some or all embodiments, items and/or features mentioned before in any technically feasible combination.

A lubricating oil supply system of an internal combustion engine may be provided, comprising an oil pump, a suction port of which is fluid-communicatively connected to a lubricating oil reservoir via a suction line and a discharge port of which is fluid-communicatively connected to a pressure line for supplying pressurized lubricating oil to lubricated sections of the engine, and a relief valve, an input port of which is fluid-communicatively connected to the pressure line and an output port of which is fluid-communicatively connected to the lubricating oil reservoir via a relief line, wherein the relief valve comprises a releasable relief channel and wherein a separate ventilation channel is provided each fluid-communicatively connecting the pressure line to at least one relief line.

The relief valve may comprise or constitute an oil pressure control valve of the lubricating oil supply system. The relief valve may be configured to release the relief channel when a pressure prevailing at its input port reaches a predetermined threshold pressure.

Alternatively or additionally, the relief valve may comprise a valve member configured for selectively opening and closing the relief channel. Alternatively or additionally, valve member may be spring biased toward a closing position in which the valve member closes the relief channel.

Alternatively or additionally, the ventilation channel may be formed by a through hole provided in a housing of the relief valve.

The ventilation channel may be provided such that a flow cross-section, in particular a minimal flow cross-section, of the ventilation channel has a diameter in the range of 1 mm to 6 mm, in particular in the range of 2 mm to 5 mm. Alternatively or additionally, the ventilation channel may be provided such that a size of the minimal flow cross-section of the ventilation channel is at least one fifth or at least one tenth or at least one twentieth of the size of a minimal flow cross-section of at least one of the pressure line, the connecting line, the relief line and the relief channel.

Alternatively or additionally, the ventilation channel may be provided such that a first end section of the ventilation channel opens into the input port or the pressure line. Alternatively or additionally, the ventilation channel may be provided a second end section, in particular arranged opposed to the first end section, of the ventilation channel opens into the output port or the relief line.

Alternatively or additionally, the ventilation channel may be configured to provide a flow passage for ambient air in a state in which the oil pump is not running.

Alternatively or additionally, in an installed state in which the lubricating oil supply system is employed in the internal combustion engine, the ventilation channel may be arranged at least partly above a lower end section of the lubricated sections of the engine. Further, in the installed state, in which the lubricating oil supply system is employed in the internal combustion engine, the ventilation channel may be arranged at least partly above the lubricated sections. Alternatively or additionally, in the installed state, in which the lubricating oil supply system is employed in the internal combustion engine, the ventilation channel may be arranged at least partly above the pressure line. Specifically, in the installed state, in which the lubricating oil supply system is employed in the internal combustion engine, an end section of the ventilation channel which opens into the relief line or output port of the relief valve is arranged above the pressure line.

Furthermore a relief valve for use in a lubricating oil supply system, in particular as described above, of an internal combustion engine, may be provided. As such, the provided relief valve may be configured as the above described relief valve used in the proposed lubricating supply system. The proposed relief valve may comprise a releasable relief channel and a separate ventilation channel each fluid-communicatively connecting an input port to an output port of the relief valve.

The input port may be configured to be fluid-communicatively connected to a pressure line of the lubricating oil system. Alternatively or additionally, the output port may be configured to be fluid-communicatively connected to a return line of the lubricating oil system.

### Industrial Applicability

With reference to the Figures, a lubricating oil supply system of an internal combustion engine and a relief valve for use in such a lubricating oil supply system are suggested. The suggested lubricating oil supply system and the relief valve as mentioned above are applicable in any suitable internal combustion engine. The suggested lubricating oil supply system and the relief valve may replace conventional lubricating oil supply systems and relief valves and may serve as replacement or retrofit parts.

## Claims

1. Lubricating oil supply system (12) of an internal combustion engine comprising:
- an oil pump (18), a suction port of which is fluid-communicatively connected to a lubricating oil reservoir (16) via a suction line (22) and a discharge port of which is fluid-communicatively connected to a pressure line (24) for supplying pressurized lubricating oil to lubricated sections (14) of the engine, and
- a relief valve (26), an input port (30) of which is fluid-communicatively connected to the pressure line (24) and an output port (32) of which is fluid-communicatively connected to the lubricating oil reservoir (16) via a relief line (34), wherein the relief valve (26) comprises a releasable relief channel (36) and a separate ventilation channel (38) each fluid-communicatively connecting the pressure line (24) to the relief line (34).

2. Lubricating oil supply system according to claim 1, wherein the relief valve (26) comprises or constitutes an oil pressure control valve of the lubricating oil supply system (12).

3. Lubricating oil supply system according to claim 1 or 2, wherein the relief valve (26) is configured to release the relief channel (36) when a pressure prevailing at its input port (30) reaches a predetermined threshold pressure.

4. Lubricating oil supply system according to any one of claim 1 to 3, wherein the relief valve (26) comprises a valve member (40) configured for selectively opening and closing the relief channel (36), and wherein the valve member (40) is spring biased toward a closing position in which the valve member (40) closes the relief channel (36).

5. Lubricating oil supply system according to any one of claim 1 to 4, wherein the ventilation channel (38) is formed by a through hole provided in a housing (42) of the relief valve (36).

6. Lubricating oil supply system according to any one of claim 1 to 5, wherein a flow cross-section of the ventilation channel (38) has a diameter in the range of 1 mm to 6 mm, in particular in the range of 2 mm to 5 mm.

7. Lubricating oil supply system according to any one of claim 1 to 6, wherein the size of a minimal flow cross-section of the ventilation channel (38) is at least one fifth or at least one tenth of the size of a minimal flow cross-section of the relief channel (36).

8. Lubricating oil supply system according to any one of claim 1 to 7, wherein a first end section of the ventilation channel (38) opens into the input port (30) or the pressure line (24).

9. Lubricating oil supply system according to any one of claim 1 to 8, wherein a second end section of the ventilation channel (38) opens into the output port (32) or the relief line (32).

10. Lubricating oil supply system according to any one of claim 1 to 9, wherein the ventilation channel (38) is configured to provide a flow passage for ambient air in a state in which the oil pump is not running.

11. Lubricating oil supply system according to any one of claim 1 to 10, wherein in an installed state in which the lubricating oil supply system (12) is employed in the internal combustion engine, the ventilation channel (38) is arranged at least partly above a lower end section of the lubricated sections (14) of the engine.

12. Lubricating oil supply system according to any one of claim 1 to 11, wherein in the installed state, in which the lubricating oil supply system (12) is employed in the internal combustion engine, the ventilation channel (38) is arranged at least partly above the lubricated sections (14).

13. Lubricating oil supply system according to any one of claim 1 to 12, wherein in the installed state, in which the lubricating oil supply system (12) is employed in the internal combustion engine, the ventilation channel (38) is arranged at least partly above the pressure line (24).

14. Lubricating oil supply system according to any one of claim 1 to 13, wherein in the installed state, in which the lubricating oil supply system (12) is employed in the internal combustion engine, an end section of the ventilation channel (38) which opens into the relief line (34) or output port (32) of the relief valve (26) is arranged above the pressure line (24).

15. Relief valve (26) for use in a lubricating oil supply system (12) of an internal combustion engine, comprising a releasable relief channel (36) and a separate ventilation channel (38) each fluid-communicatively connecting an input port (30) to an output port (32) of the relief valve (26).
